# EUROPEAN PATENT SPECIFICATION

(11) **EP 0 415 708 B1**
(45) Date of publication and mention of the grant of the patent: **22.05.1996**
(21) Application number: 90309392.0
(22) Date of filing: 28.08.1990
(51) Int. Cl.: G11B 5/716, G11B 5/702

(54) **Magnetic recording medium**
Magnetischer Aufzeichnungsträger
Milieu d'enregistrement magnétique

(30) Priority: 29.08.1989 JP 222586/89; 30.08.1989 JP 224243/89; 30.08.1989 JP 224245/89
(43) Date of publication of application: 06.03.1991
(73) Proprietor: KONICA CORPORATION, Tokyo 163 (JP)
(72) Inventor: Goto, Narito, Hino-shi, Tokyo (JP); Ando, Yasuo, Hino-shi, Tokyo (JP); Matsuda, Atsuko, Hino-shi, Tokyo (JP); Nishikawa, Takuo, Hino-shi, Tokyo (JP); Kawakami, Akira, Hino-shi, Tokyo (JP)
(74) Representative: Ellis-Jones, Patrick George Armine

(56) References cited:
- EP-A- 0 389 994
- DE-A- 3 835 613
- DE-A- 3 904 068

## Description

This invention relates to a magnetic recording medium with improved electromagnetic conversion characteristics, which is capable of displaying satisfactory output characteristics and forming magnetic layers having an improved coatability in the course of the preparation of said medium, which is applicable, for example, to video-tapes and audio-tapes.

In recent years, for example, DATs (Digital Audio Tape recorders) have appeared in the audio field and 8 mm standard video-tapes having a width narrower than the conventional ½-inch standard tapes have appeared in the VTR field, and they are becoming more popular.

Such a magnetic recording medium as mentioned above has more and more requirements for achieving a higher density recording performance. In other words, magnetic recording media excellent in electromagnetic conversion characteristics have been required.

Magnetic recording media generally used have a structure whereby a magnetic layer comprising ferromagnetic powder dispersed in a binder is laminated on a non-magnetic support.

Among the above-mentioned media, the so-called multilayered tapes each comprising upper and lower layers are designed so as to separate the functions of the upper and lower layers from each other. Thus the upper layer functions to provide the video output and the lower layer provides the chroma·audio output.

With this arrangement of magnetic layers, however, it is very hard to uniformly disperse ferromagnetic powder even if ordinary binders are used, so that there is a limitation to the dispersibility of the ferromagnetic powder.

As a result, the above-mentioned double-layer structured magnetic recording media do not display satisfactory output characteristics.

In this type of media, the above-mentioned upper and lower layers use different types of ferromagnetic powder. Therefore, when using different types of binders which correspond to the different types of the ferromagnetic powder, there may be some instances where the coatability of magnetic layers deteriorates.

DE-A-3835613 discloses a magnetic recording medium for a video tape recorder having a support and provided thereon a plurality of magnetic layers.

DE-A-3904068 discloses a magnetic recording medium comprising a support and at least two magnetic layers.

EPA-389994 discloses a magnetic recording medium with at least two magnetic layers provided on one side of the support.

It is an object of the invention to provide a recording medium having excellent electromagnetic conversion characteristics, which is capable of both obtaining satisfactory output characteristics and forming a magnetic layer displaying an improved coatability in preparing the media. It should not cause rubbing noise and head adhesion and should, particularly, have improved electromagnetic conversion characteristics in high frequency regions and improved replay outputs.

The mechanical strength, coatability, surface characteristics and the adhesion to the support of each of the magnetic layers thereof can be improved by providing a ferromagnetic powder with an improved dispersibility and a high density in the specific binders and, particularly, the electromagnetic conversion characteristics and running stability can be improved, and drop-outs and edge damage can also remarkably be reduced.

According to the present invention there is provided a magnetic recording medium having
(a) a support
(b) a first magnetic layer provided on said support, which comprises an aliphatic polyester polyurethane and a first magnetic powder, and
(c) a second magnetic layer provided on said first magnetic layer, which comprises an aromatic polyester polyurethane and a second magnetic powder, the specific surface area BET values of said first magnetic powder and said second magnetic powder being not less than 25m/g, the said value of said first magnetic powder being different from that of said second magnetic powder, and at least one of said polyurethanes contains a polar group which is -SO₃M, -OSO₃M, -COOM or - pO(OM')₂, in which M is a hydrogen or an alkali metal and M' is a hydrogen, an alkali metal or a hydrocarbon group.

The magnetic recording media of the invention are each comprised of plural magnetic layers. The magnetic media have a double-layered structure comprising upper and lower layers, in order to improve the balance of a video output and a chroma-audio output.

The magnetic layers contain ferromagnet powders having specific surface area BET values of not less than 25m/g, preferably not less than 30 m/g in terms of BET value dispersed in the binders thereof. The specific surface area value of the ferromagnetic powder is different in different layers.

In a preferred embodiment of the invention, the mol number of the polar group of the binder contained in the upper layer (the second layer) is more than or equal to the mol number of the polar group of the binders contained in the lower layer (the first layer), each per a unit amount by weight of the magnetic powder. The mol number of the polar group means the total number of moles of the above-mentioned polar group in 1 g of the resin used as a binder.

The magnetic recording medium of the invention comprises a support onto which the first magnetic layer and the second magnetic layer each containing ferromagnetic powder and a binder are provided in the above-mentioned order, wherein the first magnetic layer contains an aliphatic polyester polyurethane and the second magnetic layer contains an aromatic polyester polyurethane.

In the magnetic recording medium of the invention, either of the polyurethanes contained in the first or second magnetic layer, or preferably both, have a polar group.

The above-mentioned polyurethane resins are advantageous because they improve the dispersibility of the ferromagnetic powder contained in the magnetic layers and provide high electromagnetic conversion characteristics.

The polyurethane resins containing polar groups as defined above can be obtained by both a condensation reaction and an addition reaction by using a a polar group-containing dicarboxylic acid , a dicarboxylic acid not containing a polar group, a diol; and a diisocyanate.

A method by which a polyurethane resin is modified so as to introduce a polar group may also be considered.

The method comprises introducing a polar group into a resin through a dehydrochlorination reaction by condensation of the above-described polyurethane resins and compounds containing the polar groups and chlorine such as Cℓ-CH₂CH₂SO₃M, Cℓ-CH₂CH₂OSO₃M, Cℓ-CH₂-COOM, or 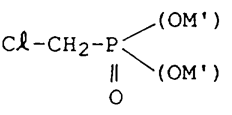 (in which M and M' are as defined above).

The above-mentioned carboxylic acid components, which can be used for obtaining the above-mentioned polyurethane resins, include, for example, aromatic dicarboxylic acids such as terephthalic acid, isophthalic acid, orthophthalic acid and 1,5-naphthalic acid; aromatic oxycarboxylic acids such as p-oxybenzoic acid and p-(hydroxyethoxy)benzoic acid; aliphatic dicarboxylic acids such as succinic acid, adipic acid, sebacic acid and dodecanedicarboxylic acid; and tri- and tetracarboxylic acids such as trimellitic acid, trimesic acid and pyromellitic acid.

Among the above-given components, terephthalic acid, isophthalic acid, adipic acid and sebacic acid are preferably used.

The dicarboxylic acid components each containing a polar functional group include, for example, sodium 5-sulfoisophthalate, sodium 5-sulfoisophthalate, sodium 2-sulforterephthalate and potassium 2-sulfoterephthalate.

The above-mentioned diol components include, for example, ethylene glycol, propylene glycol, 1,3-propanediol,, 1,4-butanediol, 1,5-pentanediol, 1,6-hexanediol, neopentyl glycol, 2,2,4-trimethyl-1,3-neopentanediol, 1,4-cyclohexanedimethanol, ethylene oxide adducts of bisphenol hydride A, polyethylene glycol, polypropylene glycol and polytetramethylene glycol. Further, tri- and/or tetra ols such as trimethylol ethane, trimethylol propane, glycerol and pentaerythritol can also be used as well.

The above-mentioned isocyanate components, which are used for obtaining the polyurethane type resins, include, for example, 4,4-diphenylmethaneisocyanate, 2,4-tolylenediisocyanate, 2,6-tolylenediisocyanate, p-phenylenediisocyanate, diphenylmethanediisocyanate, m-phenylenediisocyanate, hexamethylenediisocyanate, tetramethylenediisocyanate, 3,3'-dimethoxy-4,4'-biphenylenediisocyanate, 4,4'-diisocyanate-diphenylether, 1,3-naphthalenediisocyanate, p-xylenediisocyanate, m-xylenediisocyanate, 1,3-diisocyanate methylcyclohexane, 1,4-diisocyanate methylcyclohexane, 4,4'-diisocyanate dicyclohexane, 4,4′-diisocyanate dicyclohexylmethane and isophoronediisocyanate.

When the above-mentioned polar groups are metal salts, the metals thereof are alkali metals (including, particularly, sodium, potassium and lithium). Among them, potassium is particularly preferable because of solubility, reactivity and yield.

Examples of the above-mentioned copolymerizable monomers each containing a sulfonic acid salt as the polar group include:

CH₂=CHSO₃M,

CH₂=CHCH₂SO₃M,

CH₂=C(CH₃)CH₂SO₃M,

CH₂=CHCH₂OCOCH(CH₂COOR)SO₃M,

CH₂=CHCH₂OCH₂CH(OH)CH₂SO₃M,

CH₂=C(CH₃)COOC₂H₄SO₃M,

CH₂=CHCOOC₄H₈SO₃M,

and

CH₂=CHCONHC(CH₃)₂CH₂SO₃M

[wherein M is the same as above.]

The phosphoric acid salts include, for example;

CH₂=CHCH₂OCH₂CH(OH)CH₂-O-PO₃M¹Y¹,

CH₂=CHCONHC(CH₃)CH₂-O-PO₃M¹Y,

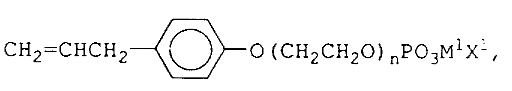

and

CH₂=CHCH₂O(CH₂CH₂O)ₘPO₃M¹X

[In the above-given sulfonic acid salts and phosphoric acid salts, M¹ represents an alkali metal; Y¹ represents a hydrogen atom, M¹ or CH₂=CHCH₂OCH₂CH(OH)CH₂-; Y represents a hydrogen atom, M¹ or CH₂=CHCONHC(CH₃)CH₂-; X¹ represents 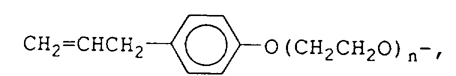 OH or OM¹; X represents CH₂=CH-CH₂-O-(CH₂CH₂O)ₘ-, OH or OM¹; and ₘ and ₙ are each an integer of 1 - 100.]

Optional copolymerizable monomers, which may be polymerized if required, include, for example, various kinds of vinyl-esters, vinylidene chloride, acrylonitrile, methacrylonitrile, styrene, acrylic acid, methacrylic acid, various kinds of acrylic acid esters, methacrylic acid ester, ethylene, propylene isobutene, butadiene, isoprene, vinyl ether, aryl ether, aryl ester, acrylamide, methacrylamide, maleic acid and maleic acid ester.

The binders used in the invention can be polymerized in polymerization methods such as emulsification-polymerization, solution polymerization, suspension polymerization and block polymerization. In any one of these methods, it is possible to use, if required, any one of the known techniques of separately or continuously adding a molecular weight controller, a polymerization starter or monomers.

The molecular weight of the above-mentioned polyurethane resins is within the range of, preferably, 2,000 - 70,000 and, more preferably, 4,000 - 50,000.

The viscosity of a magnetic coating compound is more acceptable when the molecular weight does not exceed 70,000. Also when the molecular weight is more than 2,000, there will be no unreacted parts in the coating compound at the stages where it is coated on a support and is hardened with a coreactant, thus preventing deterivation of the physical properties of the coating compound.

The proportion of the polyurethane type resins compounded into the binder is within the range of, usually, 5 - 40 parts by weight and, preferably, 10 - 30 parts by weight per 100 parts by weight of the ferromagnetic powder used.

When the proportion is within the above-given range, the dispersion rate of the ferromagnetic powder in a magnetic layer can be improved while maintaining the dispersion conditions.

The durability of magnetic layers can optionally be improved by adding the polyurethane resin and a polyisocyanate type co-reactant together into the binders.

As the polyisocyanate type co-reactants, it is possible to use any one of the following co-reactants, for example, bifunctional isocyanates such as tolylene diisocyanate, diphenylmethane diisocyanate and hexane diisocyanate; trifunctional isocyanates such as Colonate L (a Trade Mark, manufactured by Japan Polyurethane Industrial Company) and Desmodule L (a Trade Mark, manufactured by Bayer); those having conventionally been used as the co-reactant, such as urethane prepolymers containing isocyanates in both of the terminals; and polyisocyanates which can be used as the co-reactants.

The above-mentioned co-reactants may be ordinarily used in an amount within the range of 5 - 80 parts by weight of the whole amount of the binders used.

The binder containing the above-mentioned polar group is optionally used together with any well-known binder not containing such polar groups.

The ratio of the amounts of the above two kinds of the binders to be compounded are preferably within the range of 2:98 - 98:2 and, more preferably, 5:95 - 95:5, in terms of the weight proportion of the former to the latter. If the amount compounded exceeds the above-given range, there may be some instances where the electromagnetic conversion characteristics of the magnetic recording medium and the dispersibility of the ferromagnetic powder deteriorates.

The resins optionally include, in addition to the polyurethane type resin, for example, a vinyl chloride type resin, a vinyl acetate type resin, a cellulose type resin, an ester type resin, a butadiene type resin, an epoxy type resin, a phenoxy type resin, or an acryl type resin.

The magnetic recording media of the invention will be described in detail.

The magnetic layers of each magnetic recording medium is comprised of at least the first and second magnetic layers each containing specific binders.

The first magnetic layer contains an aliphatic polyester polyurethane.

The first magnetic layer contains an aliphatic polyester polyurethane in the binders thereof.

The above-mentioned aliphatic polyester polyurethane can be synthesized by, for example, a reaction of a polyisocyanate with an aliphatic polyol.

The polyisocyanates include, for example, tolylene diisocyanate (TDI), diphenylmethane-4,4'-diisocyanate (MDI), naphthylene-1,5-diisocyanate (NDI), 3,3'-dimethyl-4,4'-biphenylene diisocyanate (TODI), xylene diisocyanate (XDI), dicyclohexyl methane-4,4'-diisocyanate (MDI hydride), crude TDI, polymethylene·polyphenyl·isocyanate (crude MDI), iosphorone diisocyanate (IPDI), hexamethylene diisocyanate (HDI), hydro-xylylene diisocyanate (HXDI) and, besides, the isocyanurate-denatured, carbodiimide-denatured and burette-denatured products of the above-given isocyanates.

They may be used independently or in combination.

The above-mentioned aliphatic polyols include, for example, aliphatic polyesters prepared by the reaction of such an organic dibasic acid as maleic acid, succinic acid, adipic acid and sebacic acid with a glycol such as ethylene glycol, propylene glycol, diethylene glycol and polyethylene glycol; polyhydric alcohols such as trimethylol ethane, trimethylol propane, hexane triol, glycerol and pentaerythritol; aliphatic polyester polyols each synthesized in the reaction of at least two kinds of polyols each selected from the group consisting of the above-given glycols and polyhydric alcohols; lactam type polyester polyols synthesized of lactams such as scaprolactam, α-methyl-1-caprolactam, s-methyl-s-caprolactam, γ-butylolactam; polyether polyols synthesized of ethylene oxide, propylene oxide and butylene oxide.

The above-given polyols may be used independently or in combination.

The above-given aliphatic polyester polyurethanes include urethane resins or urethane polymers each having at least any one of an isocyanate group, a hydroxy group and a carboxyl group as the terminal groups thereof, or urethane elastomers not containing any reactive terminal groups.

The above-mentioned aliphatic polyester polyurethane type resins preferably have a weight average molecular weight Mw within the range of 5,000 - 100,000 and a glass transition temperature within the range of, normally, -50°C - 50°C.

The proportion of the above-mentioned aliphatic polyester polyurethane in the first magnetic layer is within the range of, preferably, 2 - 15 parts by weight and, more preferably, 3 - 10 parts by weight or per 100 parts by weight of the ferromagnetic powder contained. If the proportion is less than 2 parts by weight, the-electromagnetic conversion characteristics of the magnetic recording media of the invention may be lowered. On the other hand, if the proportion is more than 15 parts by weight, the desired effect may not be as much as expected from the amount of the aliphatic polyurethane used.

The binders for the magnetic recording media of the invention may optionally be used with other resin components including, for example, a thermoplastic resin, a thermosetting resin, a reactive resin, an electron-beam setting resin or the mixtures thereof, as well as the above-described aliphatic polyester polyurethanes.

The above-mentioned thermoplastic resins include, for example, vinyl chloride copolymers, vinyl chloride-vinyl acetate copolymers, vinyl chloride-vinylidene chloride copolymers, vinyl chloride-acrylonitrile copolymers, acrylic acid ester-acrylonitrile copolymers, acrylic acid estervinylidene chloride copolymers, methacrylic acid estervinylidene chloride copolymers, methacrylic acid esterethylene copolymers, polyvinyl fluoride, vinylidene chloride-acrylonitrile copolymers, acrylonitrile-butadiene copolymers, polyamide resins, polyvinyl butyral, cellulose derivatives (such as cellulose acetatebutylate, cellulose diacetate, cellulose triacetate, cellulose propionate and nitrocellulose), styrene-butadiene copolymer, polyester resins, chlorovinyl ether-acrylic acid ester copolymers, amino resins, and synthetic rubber type thermoplastic resins.

The above-given resins may be used independently or in combination.

The above-described thermosetting or reactive resins include, for example, a phenol resin, an epoxy resin, a polyurethane-setting type resin, a urea resin, a melamine resin, an alkyd resin, a silicone resin, an acryl type reactive resin, a mixture of a high-molecular weight polyester resin and an isocyanate prepolymer, a mixture of a methacrylic acid salt copolymer and a diisocyanate prepolymer, a urea formaldehyde resin, and a polyamine resin.

The above-given thermosetting or reactive resins may be used independently or in combination.

The electron-beam setting resins include, for example, unsaturated prepolymers such as those of the anhydromaleic acid type, urethane acryl type, epoxy acryl type, polyester acryl type, polyether acryl type, polyurethane acryl type and polyamide acryl type; polyfunctional monomers such as those of the ether acryl type, urethane acryl type, epoxy acryl type, phosphoric acid ester acryl type, aryl type and hydrocarbon type; and so forth.

The above-given resins may be used independently or in combination.

When the above-described aliphatic polyurethanes and the above-described other resin components are used in combination, the proportions of (an aliphatic polyester polyurethane to other resins in terms of the weight proportion is within the range of, preferably, 1:9 - 9:1 and, more preferably, 3:7 - 5:5. If the proportions thereof are outside the above range, there may be some instances where the electromagnetic conversion characteristics of the first magnetic layer and/or the dispersibility of its ferromagnetic powder deteriorate in the magnetic recording media of the invention.

The thickness of the first magnetic layer having the above-described constitution is, preferably, not more than 4 µm and, more preferably, not more than 3 µm. If its thickness exceeds 4 µm, output deterioration may result, because the close contact of the magnetic recording medium of the invention with a magnetic head may deteriorate.

The second magnetic layer contains an aromatic polyester polyurethane.

The aromatic polyester polyurethane can optionally be synthesized in a reaction of the foregoing polyisocyanate with an aromatic polyol.

The polyisocyanates include those capable of synthesizing the foregoing aliphatic polyols for the first magnetic layer.

The aromatic polyols include, for example, polyhydric phenols such as hydroquinone and bisphenol A; and aromatic polyester polyols such as those synthesized in the reaction of two or more kinds of polyols selected from the above-given polyhydric phenols, with each other.

These polyols may be used independently or in combination.

The aromatic polyester polyurethanes include a urethane resin or a urethane polymer, each having an isocyanate group, a hydroxyl group and a carboxyl group on the terminal thereof, or a urethane elastomer not containing any reactive terminal group.

In the aromatic urethane resins, it is preferable that the weight average molecular weight Mw thereof is within the range of 5,000 - 100,000 and the glass transition temperature Tg thereof is within the range of, normally, -20°C - 80°C.

In the second magnetic layer, the proportions of the aromatic polyester polyurethane compounded is within the range of, preferably, 2 - 15 parts by weight and, more preferably, 3 - 10 parts by weight, each per 100 parts by weight of the ferromagnetic powder used. If the proportions compounded are less than 2 parts by weight, the rubbing noises and head adhesion and resulting output reduction may not satisfactorily be improved. On the other hand, if the proportions exceed 15 parts by weight, the electromagnetic conversion characteristics and still frame durability may deteriorate.

The thickness of the second magnetic layer having the above-described constitution is, preferably, not more than 1 µm and, more preferably, not more than 0.5 µm. If it exceedes 1 µm, satisfactory characteristics in the medium and low frequency regions may not be obtained.

The ferromagnetic powders used as the magnetic powders used in the invention include, for example, Coadsorbed FeOx(4/3<x<3/2) powder, Fe-Aℓ metal powder, Fe-Ni metal powder, Fe-Aℓ-Ni metal powder, Fe-Aℓ-P metal powder, Fe-Ni-Aℓ metal powder, Fe-Ni-Si-Aℓ-Mn metal powder, Ni-Co metal powder, Fe-Mn-Zn metal powder, Fe-Ni-Zn metal powder, Fe-Co-Ni-Cr metal powder, Fe-Co-Ni-P metal powder, Co-Ni metal powder and Co-P metal powder.

Among the above powders, Co-adsorbed γ-Fe₂O₃ powder and Fe-Aℓ metal powder are preferably used.

The adsorption amount of stearic acid of the magnetic powder used in the present invention is preferably 20 - 250 mg/g, more preferably 100 - 230 mg/g, and the adsorption amount of pyridine is preferably 0.2 - 4.0 mg/g, more preferably 0.5 - 3.0 mg/g, for the purpose of obtaining an advantageous coating stratum. The percentage water content of the magnetic powder is preferably 0.1 - 1.0, more preferably 0.2 - 1.0 % by weight, and the preferred magnetic powder having the highest adsorption amount of stearic acid has the highest percentage of water content in view of the dispersibility of the magnetic powder in the binder resin and physical property of the coated stratum.

Where the magnetic powder which has highest adsorption amount of stearic acid also has a higher percentage water content than magnetic powders in the other layers, the magnetic powders can be well balanced with the adsorption characteristics of the binder to provide preferable dispersibility.

The adsorption amount of stearic acid or pyridine is adjusted by processing the surface of the magnetic powder with, for example, Aℓ₂O₃ or SiO₂.

The water content of the magnetic powder can be adjusted to the range mentioned above by selecting the drying conditions of the powder in the preparation process.

In a preferable embodiment of the invention, the upper magnetic layer contains a well-known ferromagnetic powder and the lower magnetic layer contains a well-known ferromagnetic powder.

Among the above-given known ferromagnetic powders for use in the upper layer, Co-adsorbed γ-Fe₂O₃ powder or Fe-Aℓ metal powder may preferably be used.

From the viewpoint of coercivity (Hc), it is desired that the ferromagnetic powders each have, preferably, not less than 300 oersted and, particularly, not less than 400 oersted. The above-given metal powder each satisfy the coercivity requirements. The specific surface area BET values of the ferromagnetic powders should be not less than 25 m/g and preferably within the range of 30 - 70 m/g, the value for each ferromagnetic powder being different.

It is preferable that the lower layer contains non-magnetic powder having a Mohs' hardness of not less than 6 in an amount by weight of not more than 1/2 of the ferromagnetic powder contained in the upper layer, because the chroma·audio outputs can be improved.

Suitable non-magnetic powders include, for example, lubricants, abrasives and antistatic agents.

The lubricants include, for example, solid lubricants such as carbon black, graphite, carbon black graft polymer, molybdenum disulfide, tungsten disulfide, mono base fatty acid having 12 - 20 carbon atoms (e.g. stearic acid), and aliphatic ester having 13 - 40 carbon atoms (e.g. butyl stearate).

Among them, carbon black is preferably used.

They may be used independently or in combination.

The lubricants may be used preferably in an amount within the range of 0.05 - 10 parts by weight of 100 parts by-weight of the above-described ferromagnetic powder.

Suitable abrasives include, for example, inorganic powder such as aluminium oxide, titanium oxide (e.g., TiO and TiO₂), silicon oxide (e.g., SiO and SiO₂), silicon nitride, chromium oxide and boron carbide; and organic powder such as benzoguanamine resin powder, melamine resin powder and phthalocyanine compound powder.

The average particle sizes of the abrasives are each preferably within the range of 0.1 - 1.0 µm.

The amount of the abrasives to be compounded is preferably within the range of 0.5 - 20 parts by weight to 100 parts by weight of the ferromagnetic powder.

Suitable antistatic agents include, for example, conductive powder such as those of carbon black, graphite, a tin oxide-antimony oxide type compound, a tin oxide-titanium oxide-antimony oxide type compound and a carbon black graft polymer.

They may be used independently or in combination.

The amount of the antistatic agent to be compounded is preferably within the range of 0.5 - 20 parts by weight to 100 parts by weight of the ferromagnetic powder.

There may be some instances where the lubricants and antistatic agents may not have their own independent functions, but one compound may be able to function as-both of the lubricant and antistatic agent.

### (support)

The raw materials for producing the supports include non-magnetic materials, for example, polyesters such as polyethyleneterephthalate and polyethylene-2,6-naphthalate; polyolefins such as polypropylene; cellulose derivatives such as cellulose triacetate and cellulose diacetate; and plastics such as polyamide and polycarbonate. Further, metals such as Cu, Aℓ and Zn; glass; and various types of ceramics such as the so-called new ceramics (such as those of boron nitride or silicon carbide) may also be used.

There is no special limitation to the configurations of the above-mentioned supports. They may be in any one of the configurations such as the tape-, sheet-, card-, disk- and drum-shapes and, if required, various materials may be selectively used so as to meet the configurations.

The thicknesses of the supports are within the range of, preferably, 3 - 100 µm and, more preferably, 3 - 50 µm when the support is in the tape- or sheet-shape; and, preferably, 30 - 100 µm when it is in the disk- or card-shape. When it is in the drum shape, the support may be made in any of the shapes corresponding to a recorder to be used, such as the cylindrical shape.

With the purposes of improving the running property of a magnetic recording medium and preventing the medium from producing static and erroneously transferring an image, a back-coating layer may optionally be provided onto the other side (i.e., the rear side,) of the support where no magnetic layer is present.

With the purpose of improving the close contact property of the magnetic layer with the non-magnetic support, an interlayer may also optionally be arranged on the side of the support where the magnetic layer is arranged.

### (Preparation of the magnetic recording medium)

The magnetic recording media of the invention can be prepared in a manner such that, after a magnetic coating compound is prepared by kneading and dispersing the magnetic layer forming components such as the above-mentioned ferromagnetic powder and binders in a solvent, the resulting coating compound is coated on the non-magnetic support and then dried.

The solvents which may be used for kneading and dispersing the magnetic layer forming components include, for example, ketones such as acetone, methylethyl ketone (MEK), methylisobutyl ketone (MIBK) and cyclohexanone; alcohols such as methanol, ethanol, propanol and butanol; esters such as methyl acetate, ethyl acetate, butyl acetate, ethyl lactate, propyl acetate and ethyleneglycol monoacetate; ethers such as diethyleneglycol dimethylether, 2-ethoxy ethanol, tetrahydrofuran and dioxane; aromatic hydrocarbons such as benzene, toluene and xylene; halogenohydrocarbons such as methylene chloride, ethylene chloride, carbon tetrachloride, chloroform, ethylenechlorohydrin and dichlorobenzene.

To knead the magnetic coating compound components, the ferromagnetic powder and other magnetic coating compound components are put into a kneading machine at the same time or individually in order. For example, the magnetic powder may be added into a solution containing a dispersing agent. The mixture thereof is kneaded for a specific period of time and, after each of the remaining components is added, the magnetic coating compound is prepared during the kneading operation.

To knead and disperse the components of the coating compound, various types of kneading machines may be used. The kneading machines include, for example, a double-roll mill, a triple-roll mill, a ball mill, a pebble mill, a sand grinder, a Sqegvari attriter, a high-speed impeller dispersing machine, a high-speed stone mill, a high-speed impact mill, a disperkneader, a high-speed mixer, a homogenizer and a supersonic disperser.

To knead and disperse the above-mentioned ferromagnetic powder, a dispersant can be used.

The dispersants include, for example, lecithin, phosphoric acid esters, amine compounds, alkyl sulfates, aliphatic amides, higher alcohols, polyethylene oxides, sulfosuccinic acid, sulfosuccinic acid esters, well-known surfactants and the salts thereof, and the salts of the polymers of negative organic groups (such as -COOH and PO₃H).

These dispersants may be used independently or in combination.

The dispersants are to be added preferably in an amount within the range of 1 - 20 parts by weight to 100 parts by weight of the ferromagnetic powder used.

The coating solution of the magnetic layer forming components thus prepared is coated over a non-magnetic support in any one of the known methods.

The coating methods utilizable in the invention include, for example, a gravure roll coating method, a knife coating method, a wire-bar coating method, a doctor-blade coating method, a reverse-roll coating method, a dip coating method, an air-knife coating method, a calender coating method, a squeeze coating method, a kiss coating method and a fan coating method.

The thickness of the magnetic layer thus coated is preferably within the range of 1 - 10 µm when it is dried.

For the purposes of protecting the support, preventing static and improving the running property, a back-coating may optionally also be applied to the rear side of the support.

After the magnetic layer forming components have been coated on the support, if required, a magnetic field orientation treatment is carried out before the coating has been dried and, further, a surface smoothing treatment is optionally carried out with, for example, a super-calender roll.

Next, by cutting it into a desired shape, a magnetic recording medium can be prepared.

The magnetic recording media of the invention can be used as magnetic tapes, for example, as video or audio tapes and as floppy disks by cutting them into a disk size. In addition, similar to the ordinary magnetic recording media, they can be used even in any other shapes such as the card- and cylinder-shapes.

### [Examples]

The examples will be given so as to explain the further details of the invention. In the following examples the term, 'part or parts', herein means 'part or parts by weight'.

### (Example 1)

A magnetic coating compound was prepared by fully mixing and dispersing both of the lower and upper layer compositions having the following compositions by making use of a ball mill.

### Lower layer composition

| | |
|---|---|
| Co-γFe₂O₃ ferromagnetic powder [BET value: 38 m/g, Hc: 650 Oe | 100 parts |

| Binder A: | |
|---|---|
| Vinyl chloride resin containing a polar group (i.e., a sulfo group), [MR-110, manufactured by Japan Zeon Company] | 10 parts |

| Binder B: | |
|---|---|
| Polyurethane resin containing a polar group (i.e., a sulfo group), [UR-8700, manufactured by Toyobo Corporation] | 5 parts |
| Stearic acid | 1 part |
| Myristic acid | 1 part |
| Butyl stearate | 1 part |
| Alumina (Aℓ₂O₃) | 6 parts |
| Carbon black [average particle size: 40 mµm] | 0.8 parts |
| Cyclohexanone | 150 parts |
| Methylethyl ketone | 50 parts |
| Toluene | 50 parts |

### Upper layer composition

| | |
|---|---|
| Co-γFe₂O₃ ferromagnetic powder [BET value: 50 m/g, Hc: 800] | 100 parts |

The kinds and the amounts compounded of the other compoments were the same as those of the lower layer compositions.

The resulting magnetic coating compound for the lower layer was coated on a 14µm-thick polyethyleneterephthalate-made support and the magnetic coating compound for the upper layer was coated thereon while the magnetic coating compound for the lower layer was remaining undried. After the resulting coated support was subjected to a magnetic field orientation treatment and dried, the dried coated support was subjected to a super-calender treatment, so that both a 1.5 µm-thick lower layer and a 0.5 µm-thick upper layer were formed.

After the resulting film for use as a magnetic tape was prepared to be a video tape, and its characteristics were measured.

The results are shown in Table-1.

The characteristics were measured in the following manner.

### (a) RF-output, lumi-S/N, chroma-S/N and chroma-output:

These data were expressed by a value (dB) relative to the data of the reference tape obtained by making use of a colour video noise meter 'Shibasoku 925 D/1' on a deck 'HR-S7000' manufactured by Japan Victor Company.

The frequencies of every signal were as follows:
- RF-output:: 6 MHz
- Lumi-S/N:: 6 MHz
- Chroma-S/N:: 629 KHz
- Chroma-output:: 629 KHz

### (b) HiFi-audio output:

The data was expressed by a value (dB) relative to the data of the reference tape (manufactured by Konica Corporation) obtained by making use of a deck 'BR-S771' manufactured by Japan Victor Company.

The frequency of the output signal was 1.7 MHz.

### (c) Linear audio output:

The data was expressed by a value (dB) relative to the data of the reference tape (manufactured by Konica Corporation) obtained by making use of a deck 'BR-S771' manufactured by Japan Victor Company.

The frequency of the output signal was 1 KHz.

### (d) Coatability:

Observing the streaks produced when coating with a coater, the results graded O when the streaks were not produced and X when many streaks were produced.

### (Example 2)

A magnetic tape film was prepared in the same manner as in Example 1, except that polyurethane resin 'Esthane 5701F' manufactured by Goodrich Company was used each as binder B for the upper layer and binder B for the lower layer, and the characteristics of the resulting tape film were measured.

The results are shown in Table-1.

### (Example-3)

A magnetic tape film was prepared in the same manner as in Example 1, except that Aℓ₂O₃ and carbon black, both nonmagnetic powders were added in proportions of 1% and 0.2% (by weight of the weight of ferromagnetic powder contained) into the magnetic coating compound for the lower layer; and the characteristics of the resulting tape film were measured.

The results are shown in Table-1.

### (Example 4)

A magnetic tape was prepared in the same manner as in Example 1, except that polyurethane B1 having the following composition was used as binder B for the upper layer, and polyurethane B2 for the lower layer.

### Composition of polyurethane B1:

| | |
|---|---|
| Diphenylmethanediisocyanate (MDI) | 9 mol% |
| 1,4-butanediol | 43 mol% |
| Adipic acid | 36 mol% |
| Bisphenol A propyleneoxide adduct | 12 mol% |

### Composition of polyurethane B2:

| | |
|---|---|
| Diphenylmethanediisocyanate (MDI) | 9 mol% |
| 1,4-butanediol | 45 mol% |
| Adipic acid | 35 mol% |
| Bisphenol A propyleneoxide adduct | 11 mol% |

The results are shown in Table 1.

### (Example 5)

A magnetic tape was prepared in the same manner as in Example 1, except that polyurethane B3 having the following composition was used as binder B for the upper layer, and polyurethane B4 for the lower layer. B3 and B4 each have a sulfo group and a carboxy group respectively

### Composition of B3:

| | |
|---|---|
| Tolylenediisocyanate | 12 mol% |
| 1,6-hexanediol | 40 mol% |
| Terephthalic acid | 37 mol% |
| 1,4-butanediol | 11 mol% |

### Composition of B4:

| | |
|---|---|
| MDI | 12 mol% |
| 1,6-hexanediol | 40 mol% |
| Terephthalic acid | 37 mol% |
| 1,4-butanediol | 11 mol% |

The results are shown in Table 1.

### (Comparative Example 1)

A magnetic tape film was prepared in the same manner as in Example 1, except that nitrocellulose (NC) [manufactured by Asahi Chemical Industrial Company] was used as binder A for the lower layer; and its characteristics were measured.

The results are shown in Table-1.

### (Comparative Example 2)

A magnetic tape was prepared in the same manner as in Comparative Example 1, except that NC as binder A was used for the upper layer, polyurethane resin 'Esthane 5701F' was used as binder B for the upper layer and similarly 'Esthane 5701F' was used as binder B for the lower layer; and the characteristics of the resulting tape were measured.

The results are shown in Table-1.

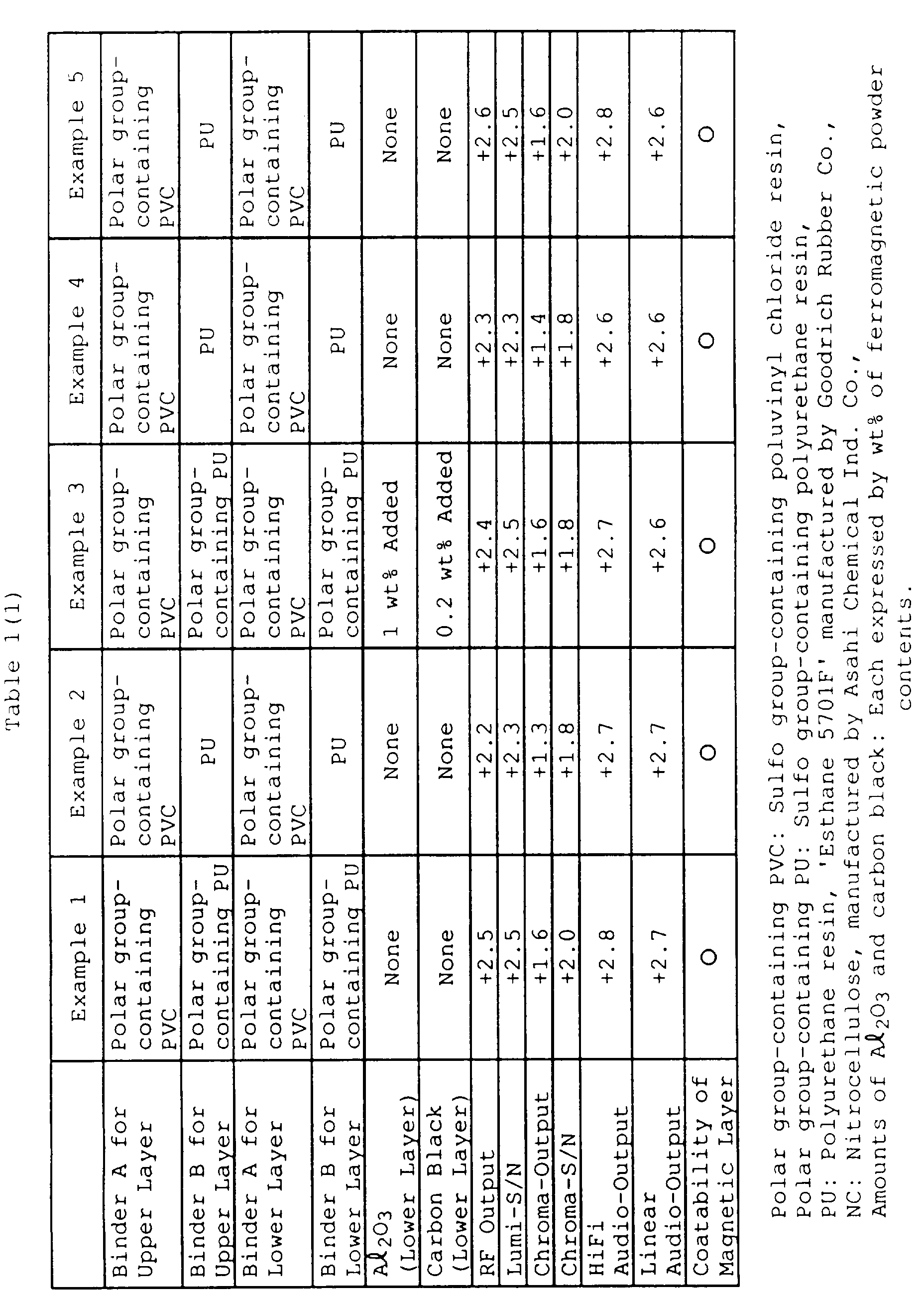

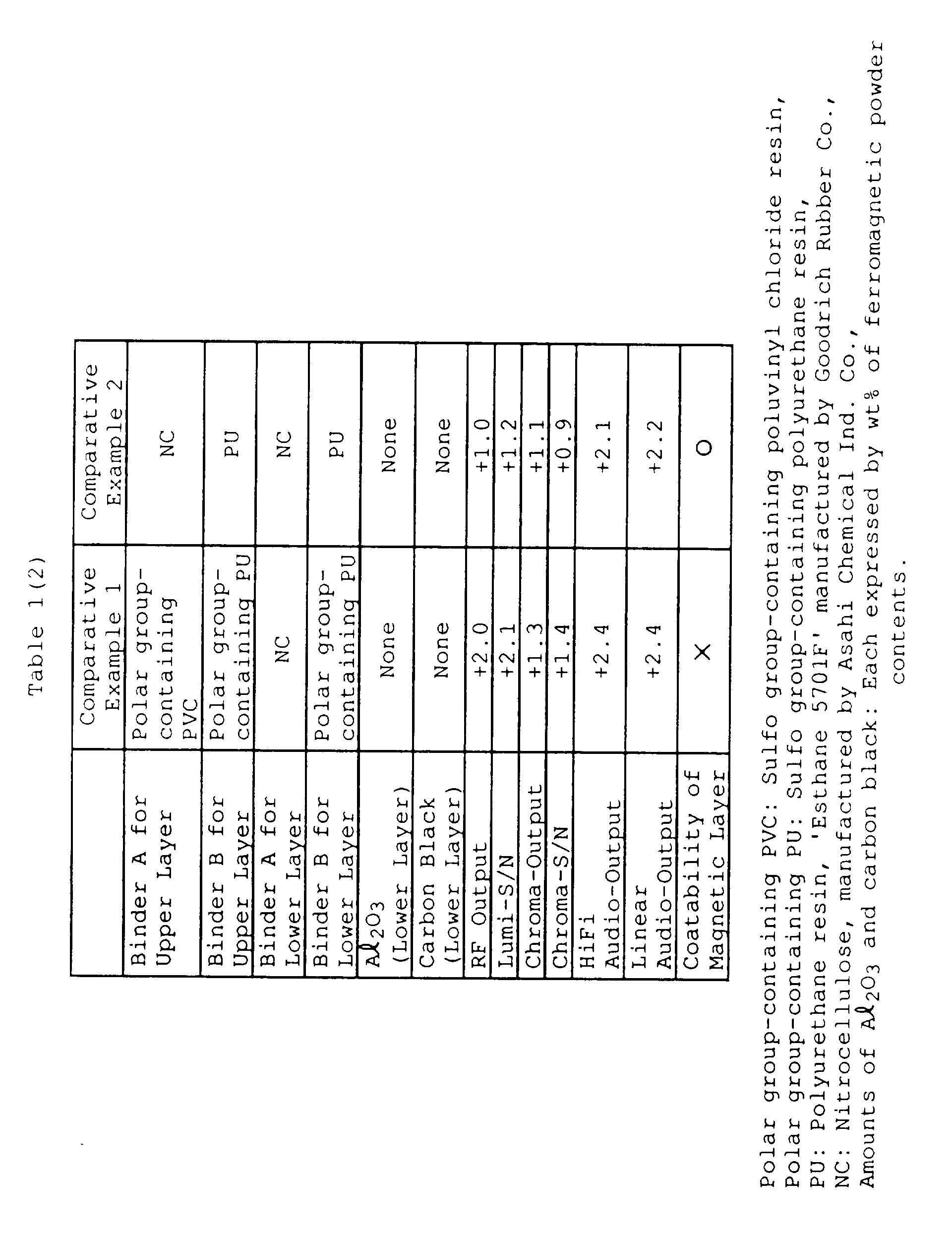

### (Evaluation)

As is obvious from Table-1, the ferromagnetic powder prepared in accordance with the invention proved to be excellent in dispersibility in binders and in electromagnetic conversion characteristics of the magnetic recording media.

It was also confirmed that magnetic layers can be formed with excellent coatability.

### (Example 6)

A three layer-magnetic tape was prepared in a similar manner to Example 1, except a middle layer was provided. The middle layer composition was same as that of the lower layer of Example 1 other than the Co-γFe₂O₃ was replaced by one having a BET value of 45 m/g and Hc 750 Oe. The layer thickness of the upper, middle and lower layers were adjusted to 0.3, 0.4 and 2.3 µm, respectively.

### (Example 7)

A magnetic tape was prepared in the same manner, as Example 6, except that the binder A of the Example 1 was replaced by carboxy group containing vinylchloride resin.

### (Example 8)

A magnetic tape was prepared in the same manner as Example 6, except that the binder A of the Example 1 was replaced by phospho group containing vinylchloride resin.

### (Example 9)

A magnetic tape was prepared in the same manner as Example 6, except that the magnetic powder in the upper layer was replaced by the Fe-Aℓ type ferromagnetic powder having characteristic values of BET: 56 m/g, Hc: 1550 Oe and σs: 125 emu/g.

### (Example 10)

A magnetic tape was prepared in the same manner as Example 6, except that the magnetic powder in the upper layer was replaced by the Co-Ti-substituted Ba-ferrite powder having characteristic values of an average particle diameter of 0.05 µm, an aspect ratio of 3 and Hc of 800 Oe.

The result of the Examples 6 - 10 are summarized in Table 2.

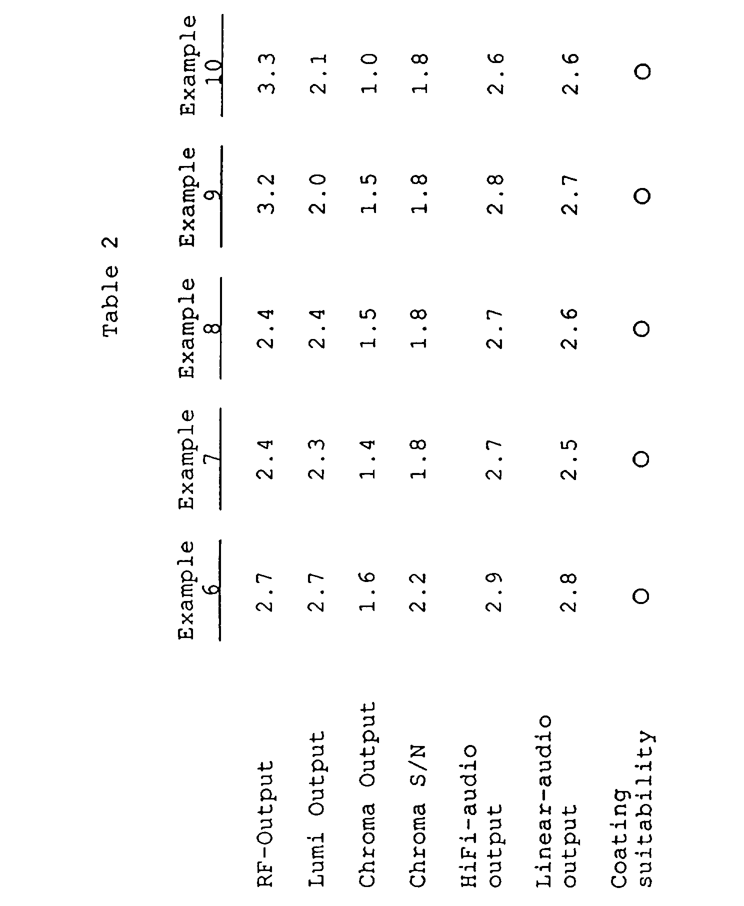

### (Example 11)

A magnetic coating compound was prepared by dispersively kneading the compositions of the first and second magnetic layers each with a kneader·sand-mill, respectively.

### The first magnetic layer composition

| | |
|---|---|
| Co-adsorbed γ-Fe₂O₃ ferromagnetic powder | - |
| [Specific surface area: 38 m/g (BET value) Hc: 650 oersted] | 100 parts |
| Aliphatic polyester-containing polyurethane (Molecular weight: 40,000, Glass transition temperature: -20°C) | 5 parts |
| Potassium sulfonate-containing vinyl chloride resin ['MR110' manufactured by Japan Zeon Co.] | 10 parts |
| Cabon black (Average particle-size: 40 mµm) | 0.8 parts |
| α-alumina | 6 parts |
| Stearic acid | 1 part |
| Myristic acid | 1 part |
| Butyl stearate | 1 part |
| Colonate L | 5 parts |
| Cyclohexanone | 150 parts |
| Methylethyl ketone | 50 parts |
| Toluene | 50 parts |

### The second magnetic layer composition

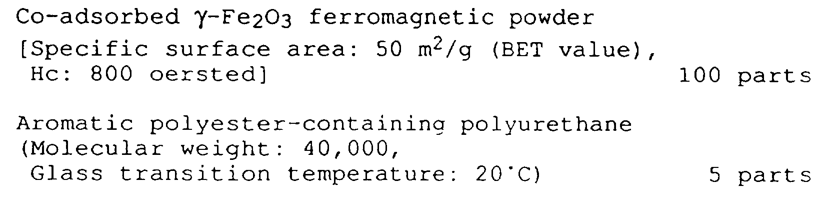

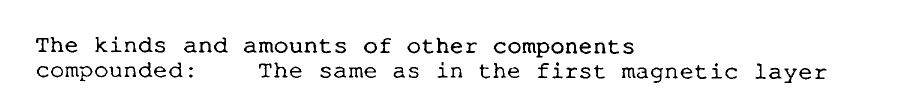

The resulting first magnetic coating compound was coated on a 14 µm-thick polyethyleneterephthalate non-magnetic support and dried, and the second magnetic coating compound was then coated thereon. Next, a magnetic field orientation treatment was carried out and then further dried. After that, a super-calender treatment was carried out, so that the magnetic layers comprising the first and second magnetic component layers were formed. The thickness of the first magnetic layer was 2.5 µm and the second magnetic layer, 0.5 µm.

The resulting wide-width magnetic tape film was prepared to be a video tape.

The characteristics of the resulting video tape were measured.

The results are shown in Table 3.

The various characteristics thereof were measured in the same way as previons examples, or in the following manner:

Rubbing noise:
(i) a replay was carried out without running the tape, measuring the system noise with a spectrum analyzer.
(ii) The sample tape was replayed 10 times every minute, and the rubbing noises were measured with the spectrum analyzer.
(iii) Ten passes of noise levels of around 8 MHz were measured and the average noise thereof was measured with reference to the system noise. The measurement conditions were as follows:
   - Temperature:: 20°C, Humidity: 10%,
   - Deck used:: 'HR-S7000', manufactured by Japan Victor Co.

### (e) Head adhesion and resulting output reduction:

(i) A 6 MHz signal was recorded for 10 minutes at a temperature of 20°C and a humidity of 65% and the replays were repeated three times.
(ii) A 8 MHz signal was recorded for 2 minutes at a temperature of 20°C and a humidity of 65% and the replayed output thereof was measured with a spectrum analyzer (Measured value A).
(iii) The tape was run to the full length at a temperature of 20°C and a humidity of 20%.
(iv) A 8 MHz signal was recorded for 2 minutes at a temperature of 20°C and a humidity of 20% and the replayed output was measured with a spectrum analyzer. (Measured value B).
(v) The difference between measured values A and B was obtained and the output drop was evaluated.

As well as the above, the conditions of the head were evaluated by the following grades:
- - :: No head adhesion found on the glass portion of the head.
- ○ :: Head adhesion found on a part of the glass portion of the head.
- Δ :: Head adhesion found on about a half of the glass portion of the head.
- × :: Head adhesion found on the whole glass portion of the head

### (f) Still frame durability:

The time required for dropping the replay output of a still frame image by 2 dB was measured in minutes.

### (Examples 12, 13 and Comparative Examples 5, 6)

The video tapes were prepared in the same manner as in Example 1, except that the polyurethanes used in the first and second magnetic layer compositions of Example 11 were replaced by those shown in Table 3, respectively. The various characteristics of the resulting video tapes were measured.

The results thereof are shown in Table 3.

### (Comparative Example 7)

A magnetic coating compound was prepared by dispersively kneading the second magnetic layer composition of Example 11 by making use of a kneader·sand-mill.

The resulting magnetic coating compound was coated on a 14 µm-thick polyethyleneterephthalate non-magnetic support and then a magnetic field orientation treatment was carried out. After it was dried, a super-calender treatment was carried out, so that a magnetic layer was formed. The thickness of the magnetic layer was 3 µm.

Thereafter, a video tape was prepared in the same manner as in Example 1 and the various characteristics of the-resulting video tape were measured.

The results thereof are shown in Table 3.

### (Comparative Example 8)

A video tape was prepared in the same manner as in Comparative Example 7, except that an aliphatic polyester-containing polyurethane was used in place of the aromatic polyester-containing polyurethane, as shown in Table 3. The various characteristics of the resulting video tape were measured.

The results thereof are shown in Table 3.

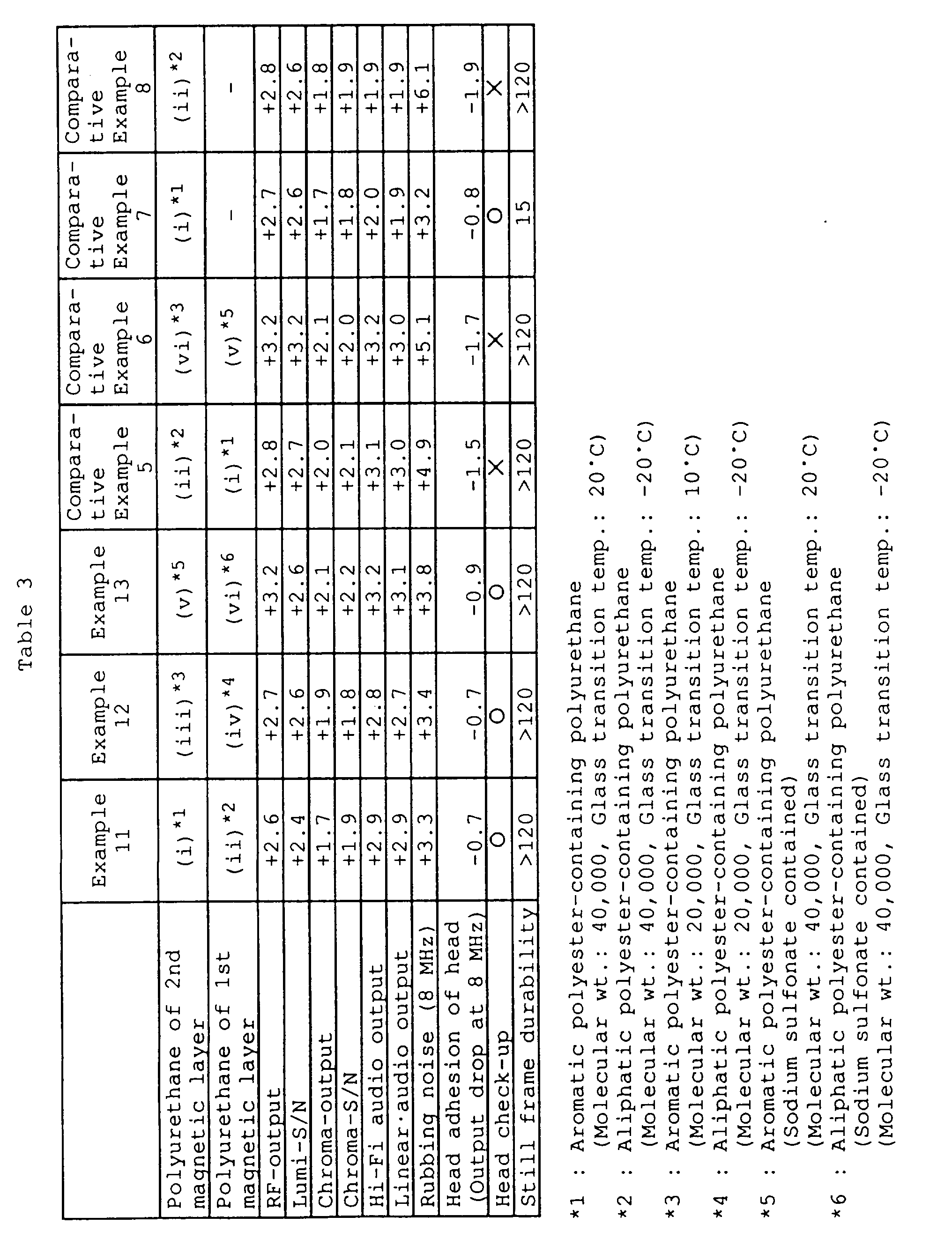

### (Evaluation)

As is apparent from Table 3, it was confirmed that the magnetic recording media of the invention were improved in the head adhesion and resulting output reduction and in the output drops in high frequency regions, as compared to the magnetic recording media of the comparative examples.

### (Examples 14 - 22 and Comparative Examples 9 - 18)

The magnetic coating compounds each for the upper and lower layers were prepared by dispersing the following upper and lower layer compositions together in the following manner; provided however that, in vinyl chloride type copolymers (a) contained in the upper layer composition and vinyl chloride type copolymers (b) contained in the lower layer composition, the content of each of the negatively charged functional groups were changed with 19 different variations as shown in Table 4.

### The upper layer composition

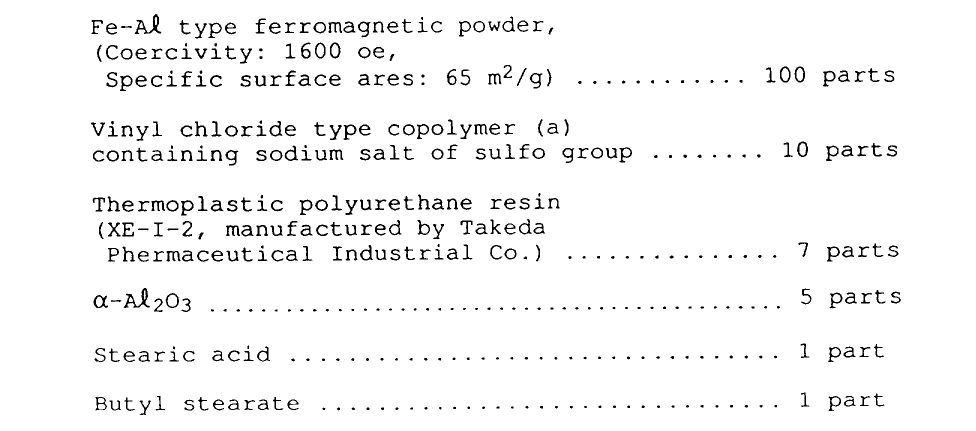

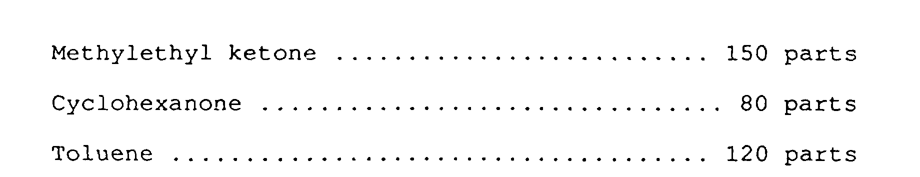

The magnetic coating compound for the upper layer was prepared by mixing the upper layer composition with a sand mill and 3 parts of polyfunctional isocyanate (Colonate L, manufactured by Japan Polyurethane Co.) were added with mixing into the resulting mixture.

The resulting magnetic coating compound for the upper layer was excellent in pot-life and storage stability.

### The lower layer composition

| | |
|---|---|
| Cobalt-containing γ-Fe₂O₃ ferromagnetic powder, (Coercivity: 800 oe, Specific surface area: 50 m/g) | 100 parts |
| Vinyl chloride type copolymer (b), containing sodium salt of sulfo group | 10 parts |
| Thermoplastic polyurethane (See the above) | 7 parts |
| α-Aℓ₂O₃ | 5 parts |
| Stearic acid | 1 part |
| Methylethyl ketone | 110 parts |
| Cyclohexanone | 70 parts |
| Toluene | 110 parts |

The magnetic coating compound for the lower layer was prepared by mixing with a sand mill and adding 2 parts of the polyfunctional isocyanate (See above) into the resulting mixture.

The resulting magnetic coating compound for the lower layer was excellent in pot-life and storage stability.

Next, the magnetic coating compounds each for the upper and lower layers were double-layered on a 14-µm thick polyethyleneterephthalate support by means of a precision extrusion coater and then dried after carrying out an orientation treatment on the magnetic field, and a back-coat layer was formed on the rear side of the support after further carrying out a super-calender treatment.

The thickness of the resulting laminated magnetic layer was 0.2 µm for the upper layer and 2.6 µm, respectively, and the thickness of the back-coat layer was 0.7 µm.

Next, a video tape was prepared by slitting the resulting laminate into portions 12.7 mm (½ inch) wide, and the various characteristics were measured.

The results of the measurements are shown in Table 5.

The measurements of the characteristics were carried out as follows:

### Electromagnetic conversion characteristics:

RF outputs, lumi-S/N and chroma-outputs were measured by a video-deck and Shiba-Soku 925 D-1 as a noise-meter.

### Drop-out:

Whilst using a HR-S7000 deck, a Shiba-Soku dropout counter (VHO1Bz) was used to measure the average one-minute dropout numbers (155 µS and -14 dB) of 100% white signals.

### Running durability:

Using a video deck under the conditions of a temperature of 40°C and a relative humidity of 70%, a series of rewinding playback tests were repeated with up to 400 passes wherein the length of time required for a 2 hour-playback operation was treated as one pass.

### Coatability:

It was graded A when a coating was carried out uniformly with a specific coated thickness, without coating defects. It was graded B when fine streaks were found by visually checking up the coated samples. Further, it was graded C when so many coating streaks were found that any coating cannot substantially be made or the whole surface of the heat-roll of a calender was stained so much that no sample could actually be obtained.

### Surface roughness:

Ra values of cut-off of 0.08 mm were measured through a Surfcom 1500A manufactured by Tokyo Seimitsu Company.

**Table 4**

| Sample No. | Functional group (-SO₃Na) contents of vinyl chloride type copolymer (µmol/g) | |
|---|---|---|
| | (a) | (b) |
| 1 | 0 | 0 |
| 2 | 0 | 1 |
| 3 | 0 | 3 |
| 4 | 0 | 5 |
| 5 | 0 | 10 |
| 6 | 1 | 0 |
| 7 | 1 | 1 |
| 8 | 1 | 3 |
| 9 | 1 | 10 |
| 10 | 3 | 0 |
| 11 | 3 | 3 |
| 12 | 3 | 5 |
| 13 | 3 | 10 |
| 14 | 5 | 0 |
| 15 | 5 | 5 |
| 16 | 5 | 10 |
| 17 | 10 | 0 |
| 18 | 10 | 5 |
| 19 | 10 | 10 |

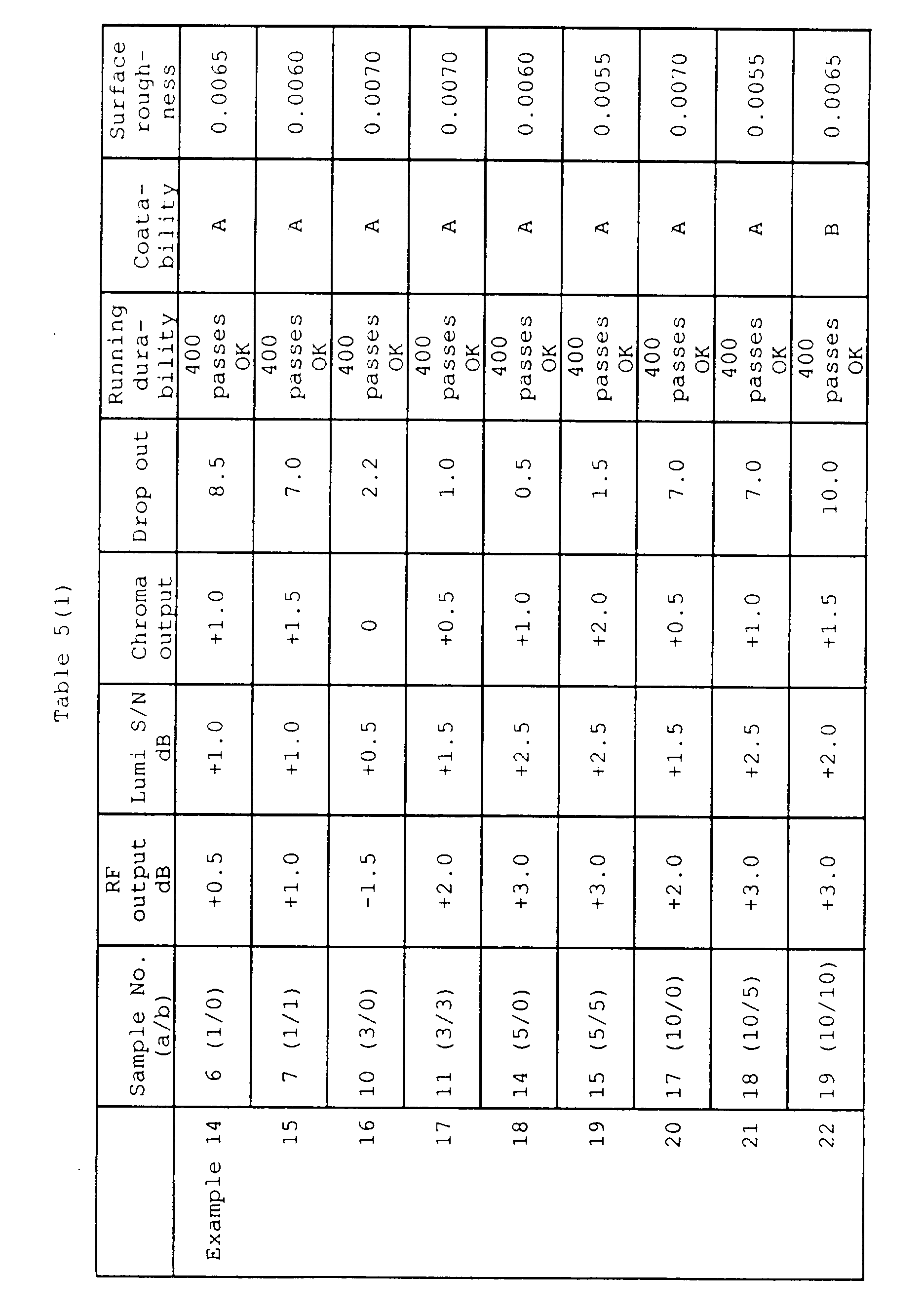

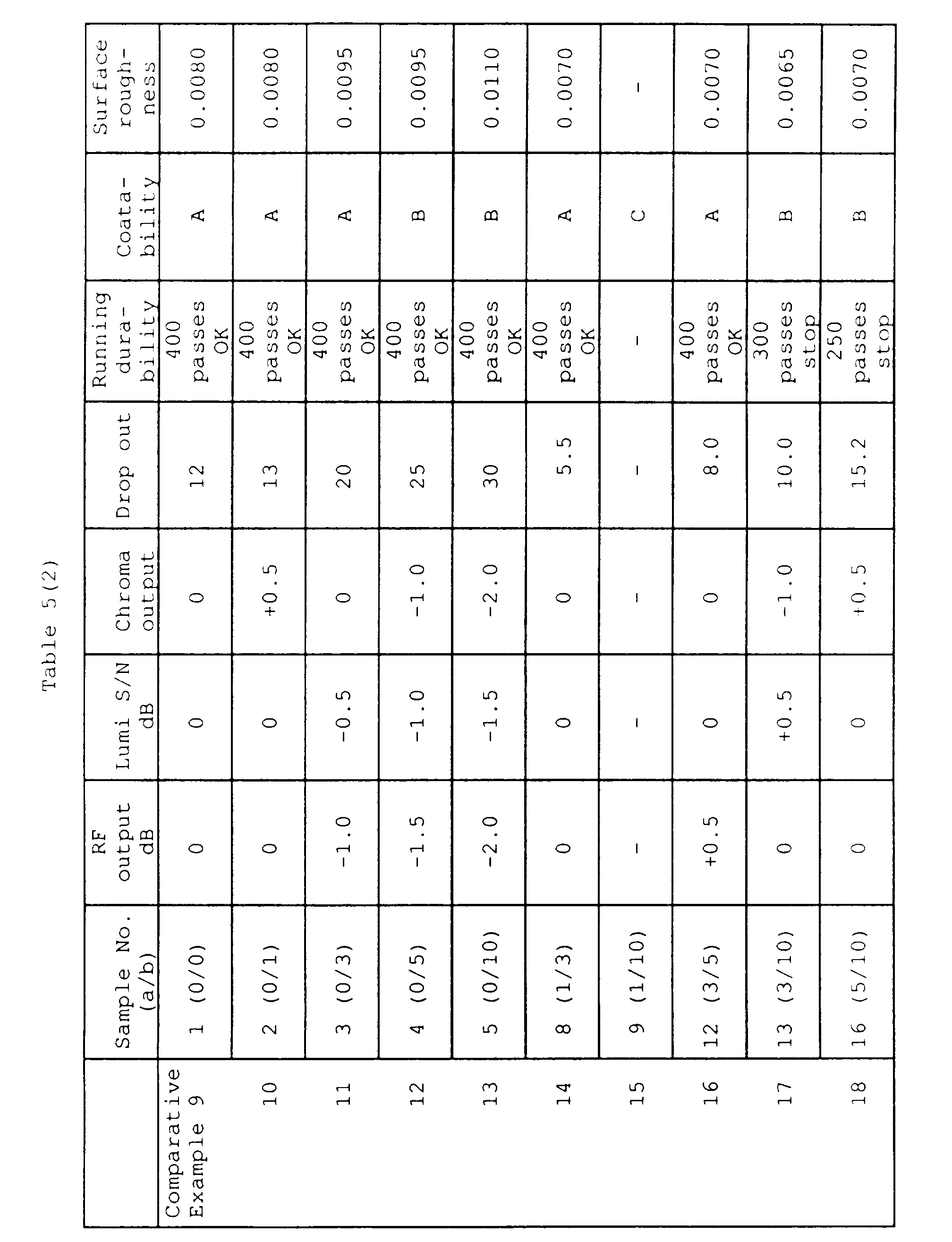

### Examples 23 to 41

Magnetic tape samples 23 - 41 were prepared in the same manner as in the previous Example, except that the layer compositions were modified as follows:

### The upper layer composition

| | |
|---|---|
| Fe-Aℓ type ferromagnetic powder, (Coercivity: 1600 oe, Specific surface ares: 65 m/g) | 100⁻parts |
| Vinyl chloride-vinylacetate type copolymer | 10 parts |
| Thermoplastic polyurethane resin (c) | 7 parts |
| α-Aℓ₂O₃ | 5 parts |
| Stearic acid | 1 part |
| Butyl stearate | 1 part |
| Methylethyl ketone | 150 parts |
| Cyclohexanone | 80 parts |
| Toluene | 120 parts |

### The lower layer composition

| | |
|---|---|
| Cobalt-containing γ-Fe₂O₃ ferromagnetic powder, (Coercivity: 800 oe, Specific surface area: 50 m/g) | 100 parts |
| Vinyl chloride-vinylacetate type copolymer | 10 parts |
| Thermoplastic polyurethane (d) | 7 parts |
| α-Aℓ₂O₃ | 5 parts |
| Stearic acid | 1 part |
| Methylethyl ketone | 110 parts |
| Cyclohexanone | 70 parts |
| Toluene | 110 parts |

The amount of the carboxy groups (c) and (d) used is described in Table 6. Samples were tested in a same manner as the previous Examples and the result is summarized in Table 7.

### Examples 42 to 60

Magnetic tape samples 42 - 60 were prepared in the same manner of Example 4, except that the layer compositions were modified as follows:

### The upper layer composition

| | |
|---|---|
| Fe-Aℓ type ferromagnetic powder, (Coercivity: 1600 oe, Specific surface ares: 65 m/g) | 100 parts |
| Vinyl chloride type copolymer (a) containing sodium salt of sulfo group | 10 parts |
| Thermoplastic polyurethane resin (e) | 7 parts |
| α-Aℓ₂O₃ | 5 parts |
| Stearic acid | 1 part |
| Butyl stearate | 1 part |
| Methylethyl ketone | 150 parts |
| Cyclohexanone | 80 parts |
| Toluene | 120 parts |

### The lower layer composition

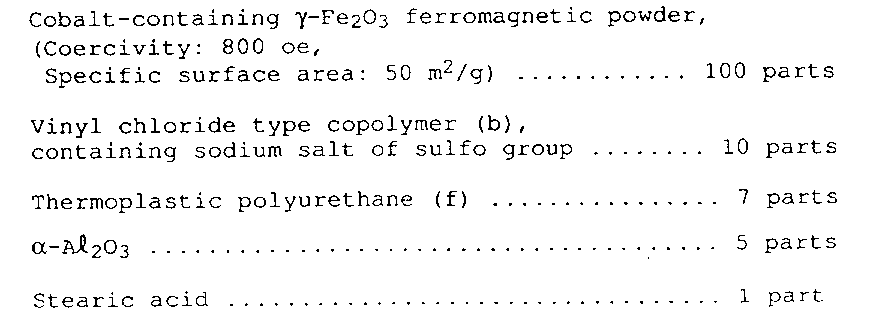

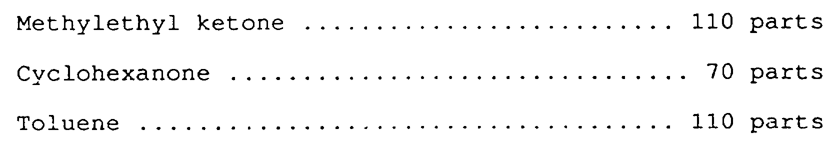

Number of the polar groups of (a) and (e), and (b) and (f) is shown in Table 8. The test result is summarized in Table 9.

As is obvious from Tables 2 and 3, as compared to the comparative examples, the magnetic recording media of the invention can further excellently display electromagnetic conversion characteristics (particularly in ordinary temperature and humidity conditions), running stability and mechanical strength (particularly in high temperature and humidity conditions) and they are also excellent from the aspects of drop-out reduction, surface property of the magnetic layer, and coatability.

It was further confirmed that rubbing noises and dog-ears were remarkably reduced.

**Table 6**

| Sample No. | Functional group (-COOH) contents of polyurethane (µmol/g) | |
|---|---|---|
| | (c) | (d) |
| 23 | 0 | 0 |
| 24 | 0 | 1 |
| 25 | 0 | 3 |
| 26 | 0 | 5 |
| 27 | 0 | 10 |
| 28 | 1 | 0 |
| 29 | 1 | 1 |
| 30 | 1 | 3 |
| 31 | 1 | 10 |
| 32 | 3 | 0 |
| 33 | 3 | 3 |
| 34 | 3 | 5 |
| 35 | 3 | 10 |
| 36 | 5 | 0 |
| 37 | 5 | 5 |
| 38 | 5 | 10 |
| 39 | 10 | 0 |
| 40 | 10 | 5 |
| 41 | 10 | 10 |

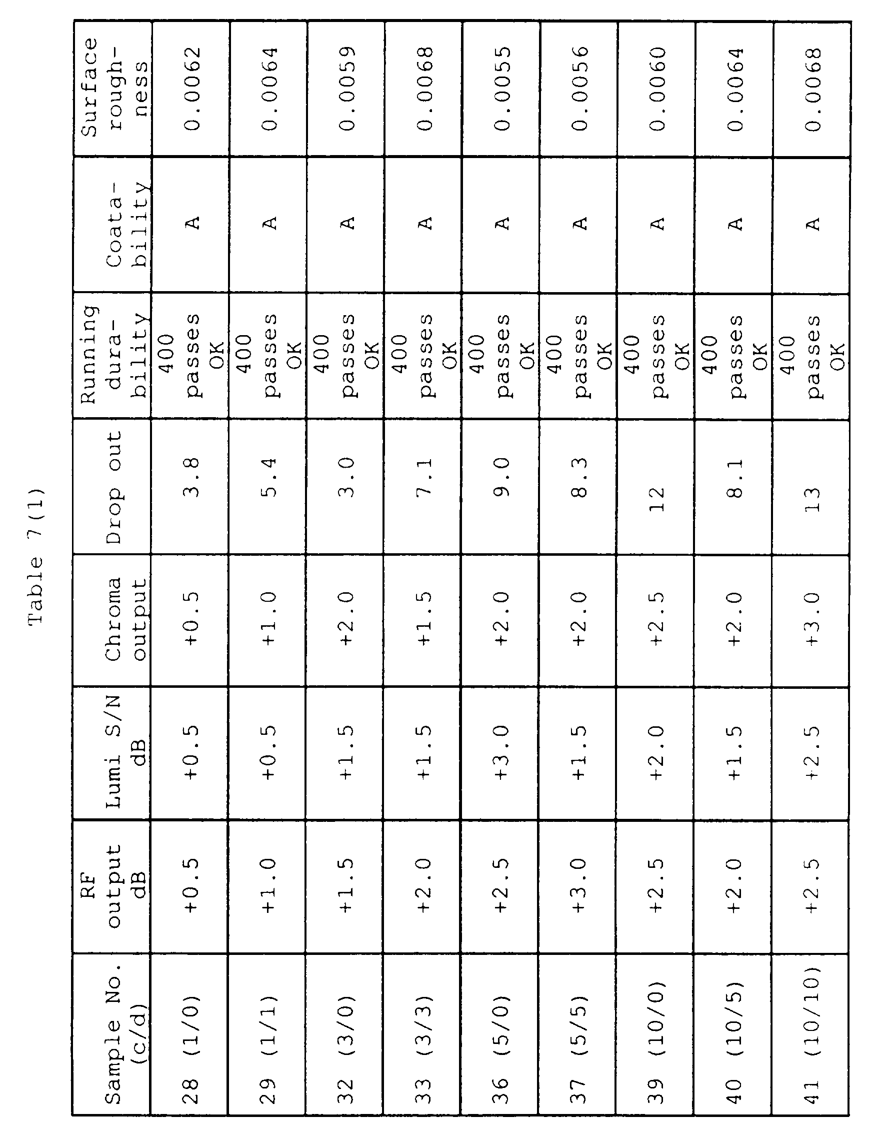

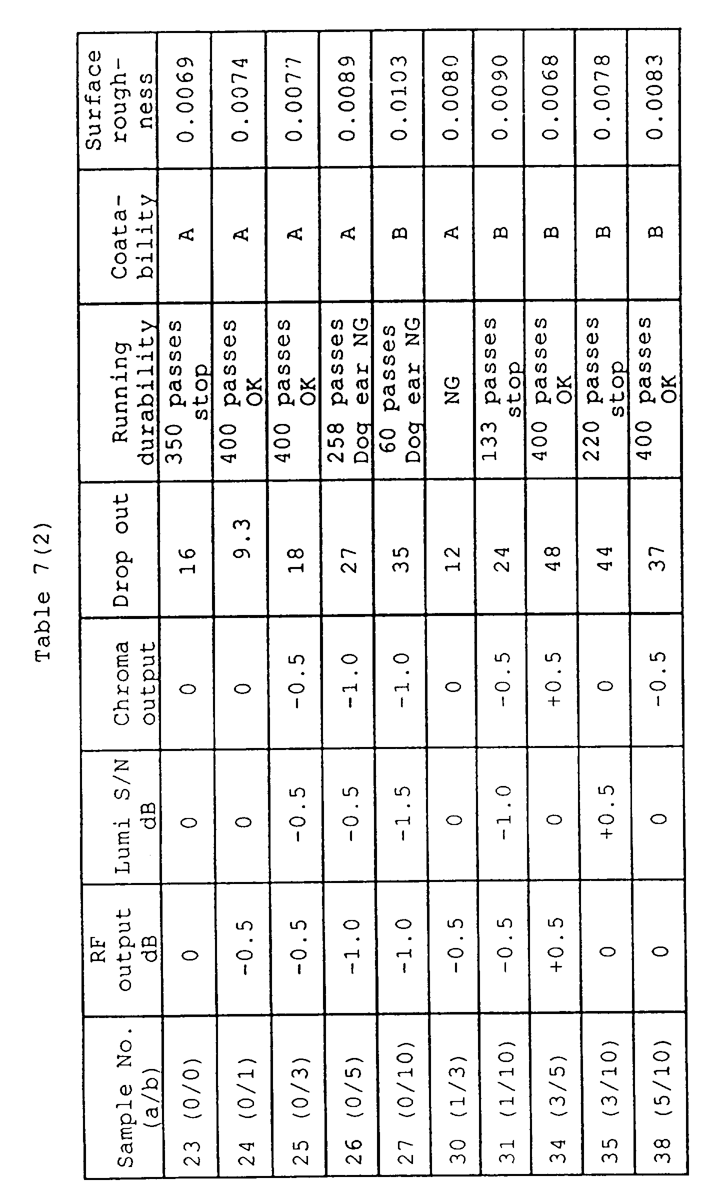

**Table 8**

| Sample No. | Functional group (-SO₃Na-COOH) contents of binder chloride type copolymer (µmol/g) | |
|---|---|---|
| | (a) + (e) | (b) + (f) |
| 42 | 0 | 0 |
| 43 | 0 | 1 |
| 44 | 0 | 3 |
| 45 | 0 | 5 |
| 46 | 0 | 10 |
| 47 | 1 | 0 |
| 48 | 1 | 1 |
| 49 | 1 | 3 |
| 50 | 1 | 10 |
| 51 | 3 | 0 |
| 52 | 3 | 3 |
| 53 | 3 | 5 |
| 54 | 3 | 10 |
| 55 | 5 | 0 |
| 56 | 5 | 5 |
| 57 | 5 | 10 |
| 58 | 10 | 0 |
| 59 | 10 | 5 |
| 60 | 10 | 10 |

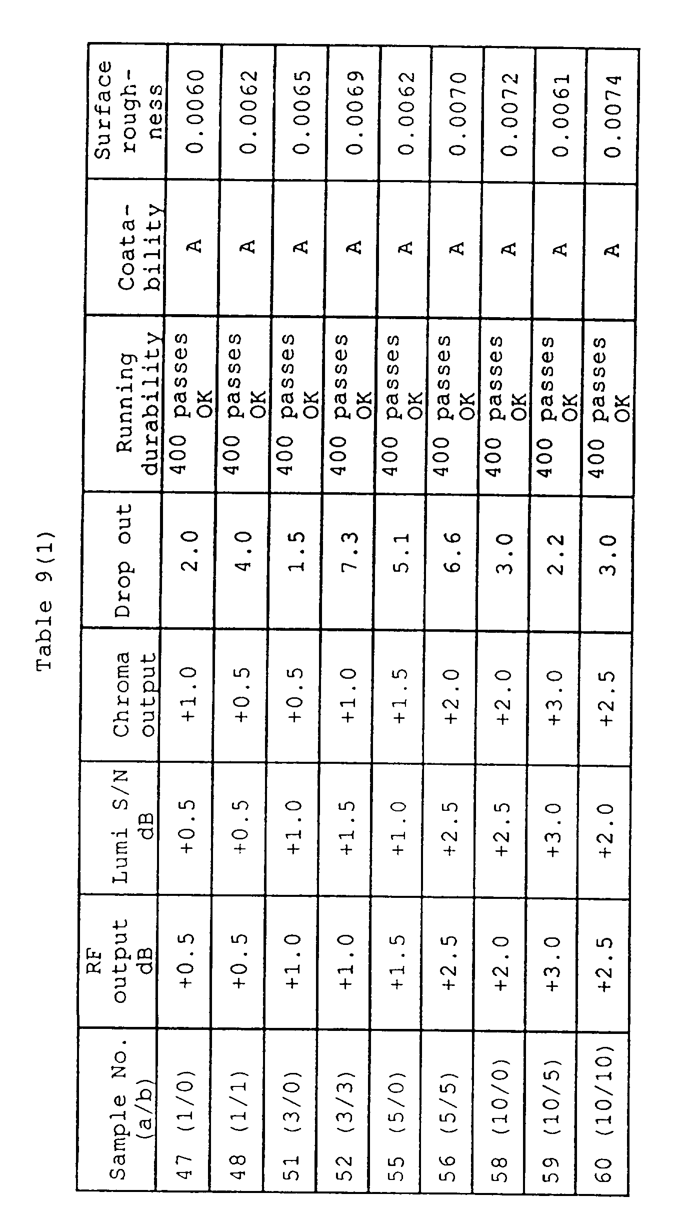

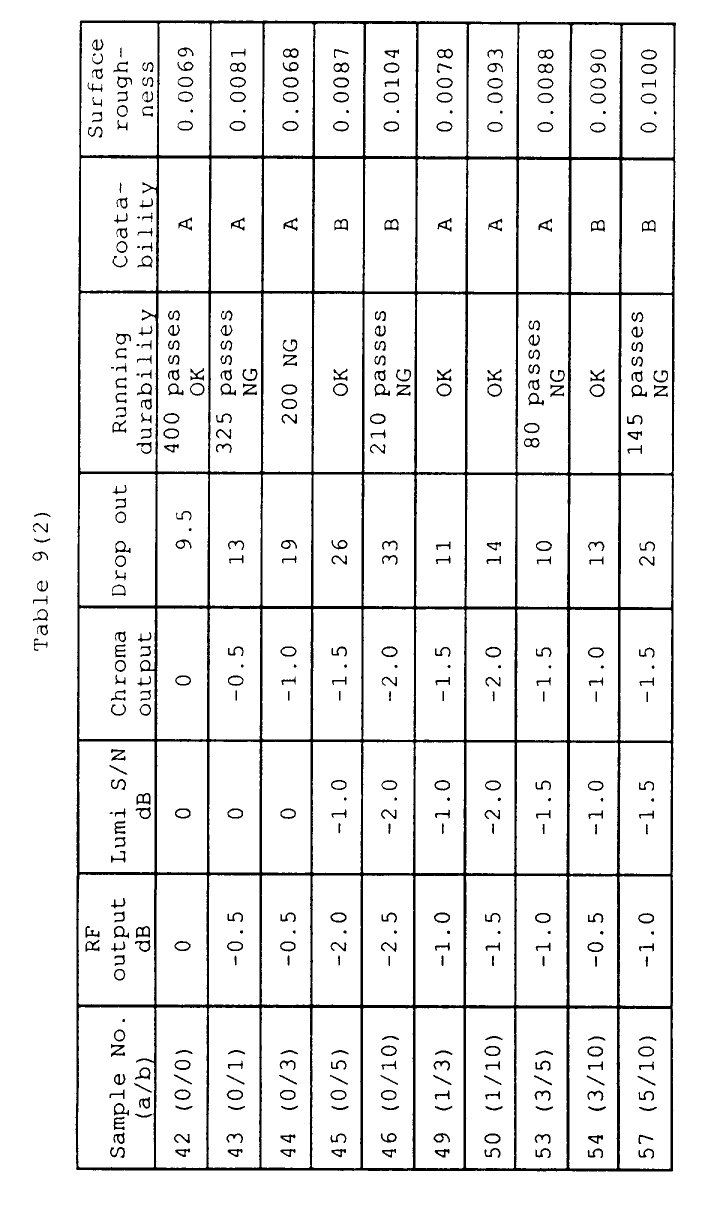

### Examples 60 to 63

An example of a three-layer magnetic tape is illustrated.

### The upper (3rd) layer composition

| | |
|---|---|
| Fe-Aℓ type ferromagnetic powder, (Coercivity: 1600 oe, specific surface ares: 65 mg) | 100 parts |
| Vinyl chloride type copolymer (a) containing sodium salt of sulfo group | 10 parts |
| Thermoplastic polyurethane resin (XE-I-2, manufactured by Takeda Phermaceutical Industrial Co.) | 7 parts |
| α-Aℓ₂O₃ | 5 parts |
| Stearic acid | 1 part |
| Butyl stearate | 1 part |
| Methylethyl ketone | 150 parts |
| Cyclohexanone | 80 parts |
| Toluene | 120 parts |

The magnetic coating compound for the upper layer was prepared by mixing the upper layer composition in a sand mill and 3 parts of polyfunctional isocyanate (Colonate L, manufactured by Japan Polyurethane Co.) were added into the resulting mixture.

### The middle (2nd) layer composition

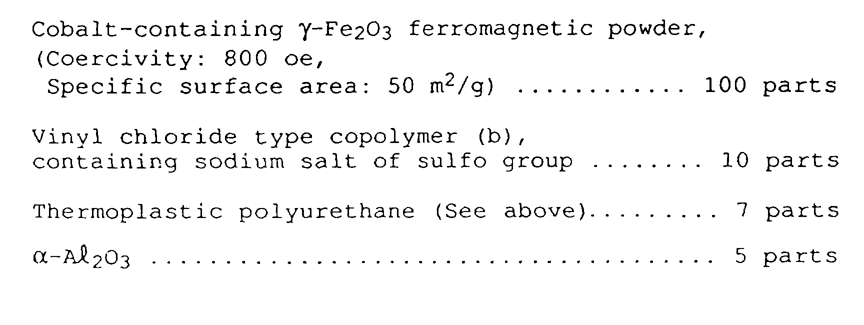

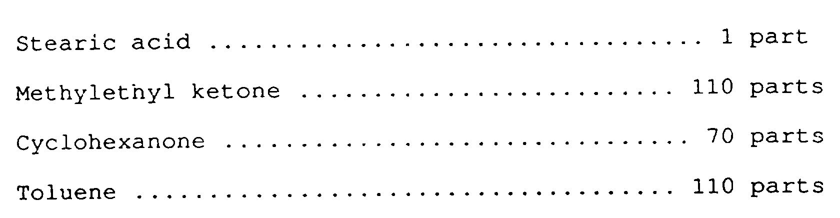

The magnetic coating compound for the lower layer was prepared by mixing in a sand mill and adding 2 parts of the polyfunctional isocyanate into the resulting mixture.

### The lower (1st) layer composition

| | |
|---|---|
| Cobalt-containing γ-Fe₂O₃ ferromagnetic powder, (Coercivity: 700 oe, Specific surface area: 40 m/g) | 100 parts |
| Vinyl chloride type copolymer (c), containing sodium salt of sulfo group | 10 parts |
| Thermoplastic polyurethane (c) | 7 parts |
| α-Aℓ₂O₃ | 2 parts |
| Carbon black (particle diameter: 25 mµm) | 5 parts |
| Stearic acid | 1 part |
| Butyl stearate | 1 part |
| Methylethyl ketone | 110 parts |
| Cyclohexanone | 70 parts |
| Toluene | 110 parts |

The magnetic coating compound for the lower layer was prepared by mixing in a sand mill and adding 2 parts of the polyfunctional isocyanate (Colonate L, manufactured by Japan Polyurethane Co.) into the resulting mixture.

Next, the magnetic coating compounds for each layer were double-layered on a 14-µm thick polyethyleneterephthalate support by means of a precision extrusion coater (FEC) and then preliminarily dried whilst an orientation treatment for the magnetic field was carried out. A back-coat layer was then formed on the rear side of the support after further carrying out a super-calender treatment. The resultant magnetic tape has an upper layer (3rd layer) of 0.2 µm thick, a middle layer of 0.3 µm thick, the lower layer (1st layer) of 2.5 µm and a backing layer of 0.7 µm thick. The contents of the functional groups (a), (b) and (c) in the resin are shown in Table 10.

Next, a video tape was prepared by slitting the resulting laminate into portions 12.7 mm (½ inch) wide, and the various characteristics were measured

The results of the measurements are shown in Tables 11.

**Table 10**

| Sample No. | Functional group contents of the binder resin (µmol/g) | | |
|---|---|---|---|
| | (-SO₃Na) (a) | (-SO₃Na) (b) | (-COOH) (c) |
| 60 | 5 | 3 | 1 |
| 61 | 3 | 1 | 0 |
| 62 | 0 | 3 | 5 |
| 63 | 1 | 5 | 3 |

**Table 11**

| Sample No. (a/b/c) | RF output dB | Chroma output | Drop out | Coatability |
|---|---|---|---|---|
| Examples 60 (5/3/1) | +2.0 | +2.0 | 4 | A |
| 61 (3/1/0) | +1.0 | +1.0 | 7 | A |
| 62 (0/3/5) | 0 | 0 | 38 | B |
| 63 (1/5/3) | -0.5 | -0.5 | 22 | B |

## Claims

1. A magnetic recording medium having
(a) a support
(b) a first magnetic layer provided on said support, which comprises an aliphatic polyester polyurethane and a first magnetic powder, and
(c) a second magnetic layer provided on said first magnetic layer, which comprises an aromatic polyester polyurethane and a second magnetic powder, the specific surface area BET values of said first magnetic powder and said second magnetic powder being not less than 25m/g, the said value of said first magnetic powder being different from that of said second magnetic powder, and at least one of said polyurethanes contains a polar group which is -SO₃M, -OSO₃M, -COOM or - PO(OM')₂, in which M is a hydrogen or an alkali metal and M' is a hydrogen, an alkali metal or a hydrocarbon group.

2. The medium of claim 1, wherein said aliphatic polyurethane is derived from a polyisocyanate and an aliphatic polyol and said aromatic polyurethane is derived from a polyisocyanate and an aromatic polyol.

3. The medium of claim 1 or 2, wherein both aliphatic and aromatic polyurethanes have a said polar group.

4. The medium of any one of claims 1 to 3, wherein the aliphatic polyurethane has a weight average molecular weight from 5,000 to 100,000 and a glass transition temperature from -50°C to 50°C.

5. The medium of any one of claims 1 to 4, wherein said aliphatic polyurethane is present in an amount from 2 to 15 parts by weight of said magnetic powder in said first layer.

6. The medium of any one of claims 1 to 5, wherein the aromatic polyurethane has a weight average molecular weight from 5,000 to 100,000 and a glass transition temperature 20 from -20°C to 80°C.

7. The medium of any one of claims 1 to 6, wherein aromatic polyurethane is present in an amount from 2 to 15 parts by weight of said magnetic powder in said second layer.

8. The medium of any one of claims 1 to 8, wherein said first layer has a thickness of not more than 4 µm, and said second layer has a thickness of not more than 1 µm.

## Patentansprüche

1. Magnetisches Aufzeichnungsmaterial mit
(a) einem Schichtträger;
(b) einer auf dem Schichtträger vorgesehenen ersten magnetischen Schicht mit einem aliphatischen Polyesterpolyurethan und einem ersten magnetischen Pulver und
(c) einer auf der ersten magnetischen Schicht vorgesehenen zweiten magnetischen Schicht mit einem aromatischen Polyesterpolyurethan und einem zweiten magnetischen Pulver, wobei die BET-Werte für die spezifische Oberfläche des ersten magnetischen Pulvers und des zweiten magnetischen Pulvers nicht weniger als 25 m/g betragen, sich der betreffende Wert des ersten magnetischen Pulvers von demjenigen des zweiten magnetischen Pulvers unterscheidet und mindestens eines der Polyurethane eine aus -SO₃M, -OSO₃M, -COOM oder -PO(OM')₂ mit M gleich einem Wasserstoff oder einem Alkalimetall und M' gleich einem Wasserstoff, einem Alkalimetall oder einer Kohlenwasserstoffgruppe bestehende polare Gruppe enthält.

2. Aufzeichnungsmaterial nach Anspruch 1, wobei das aliphatische Polyurethan von einem Polyisocyanat und einem aliphatischen Polyol und das aromatische Polyurethan von einem Polyisocyanat und einem aromatischen Polyol herrühren.

3. Aufzeichnungsmaterial nach Anspruch 1 oder 2, wobei sowohl das aliphatische Polyurethan als auch das aromatische Polyurethan die polare Gruppe enthalten.

4. Aufzeichnungsmaterial nach einem der Ansprüche 1 bis 3, wobei das aliphatische Polyurethan ein Gewichtsmittelmolekulargewicht von 5000 bis 100000 und eine Einfriertemperatur von -50°C bis 50°C aufweist.

5. Aufzeichnungsmaterial nach einem der Ansprüche 1 bis 4, wobei das aliphatische Polyurethan in einer Menge von 2 bis 15 Gew.-Teilen in bezug auf das magnetische Pulver in der ersten Schicht vorhanden ist.

6. Aufzeichnungsmaterial nach einem der Ansprüche 1 bis 5, wobei das aromatische Polyurethan ein Gewichtsmittelmolekulargewicht von 5000 bis 100000 und eine Einfriertemperatur von -20°C bis 80°C aufweist.

7. Aufzeichnungsmaterial nach einem der Ansprüche 1 bis 6, wobei das aromatische Polyurethan in einer Menge von 2 bis 15 Gew.-Teilen in bezug auf das magnetische Pulver in der zweiten Schicht vorhanden ist.

8. Aufzeichnungsmaterial nach einem der Ansprüche 1 bis 8, wobei die erste Schicht eine Dicke von nicht mehr als 4 µm und die zweite Schicht eine Dicke von nicht mehr als 1 µm aufweisen.

## Revendications

1. Système d'enregistrement magnétique ayant
(a) un support
(b) une première couche magnétique disposée sur ledit support, qui comprend un polyester-polyuréthane aliphatique et une première poudre magnétique, et
(c) une seconde couche magnétique disposée sur ladite première couche magnétique, qui comprend un polyester-polyuréthane aromatique et une seconde poudre magnétique, les valeurs BET de surface spécifique de ladite première poudre magnétique et de ladite seconde poudre magnétique n'étant pas inférieures à 25 m/g, ladite valeur de ladite première poudre magnétique étant différente de celle de ladite seconde poudre magnétique, et au moins un desdits polyuréthanes contient un groupe polaire qui est -SO₃M, -OSO₃M, -COOM ou -PO(OM')₂, où M est un hydrogène ou un métal alcalin et M' est un hydrogène, un métal alcalin ou un groupe hydrocarboné.

2. Système selon la revendication 1, dans lequel ledit polyuréthane aliphatique dérive d'un polyisocyanate et d'un polyol aliphatique et ledit polyuréthane aromatique dérive d'un polyisocyanate et d'un polyol aromatique.

3. Système selon la revendication 1 ou 2, dans lequel les polyuréthanes aliphatique et aromatique contiennent tous deux un dit groupe polaire.

4. Système selon l'une quelconque des revendications 1 à 3, dans lequel le polyuréthane aliphatique a une masse moléculaire moyenne en poids de 5000 à 100 000 et une température de transition vitreuse de -50°C à 50°C.

5. Système selon l'une quelconque des revendications 1 à 4, dans lequel ledit polyuréthane aliphatique est présent en une proportion de 2 à 15 parties en poids de ladite poudre magnétique dans ladite première couche.

6. Système selon l'une quelconque des revendications 1 à 5, dans lequel le polyuréthane aromatique a une masse moléculaire moyenne en poids de 5000 à 100 000 et une température de transition vitreuse de -20°C à 80°C.

7. Système selon l'une quelconque des revendications 1 à 6, dans lequel ledit polyuréthane aromatique est présent en une proportion de 2 à 15 parties en poids de ladite poudre magnétique dans ladite seconde couche.

8. Système selon l'une quelconque des revendications 1 à 7, dans lequel ladite première couche a une épaisseur ne dépassant pas 4 µm et ladite seconde couche a une épaisseur ne dépassant pas 1 µm.
